# EUROPEAN PATENT SPECIFICATION

(11) **EP 4 520 030 B1**
(45) Date of publication and mention of the grant of the patent: **25.03.2026**
(21) Application number: 23725112.9
(22) Date of filing: 02.05.2023
(51) Int. Cl.: H04L 65/1016, H04L 67/561, H04L 67/141, H04L 65/1108, H04L 65/1083

(54) **METHODS, USER EQUIPMENT AND INTERNET PROTOCOL MULTIMEDIA SUBSYSTEM NETWORK NODE FOR HANDLING COMMUNICATION IN A COMMUNICATION NETWORK**
VERFAHREN, BENUTZERGERÄT UND NETZWERKKNOTEN EINES INTERNETPROTOKOLL-MULTIMEDIA-SUBSYSTEMS ZUR HANDHABUNG DER KOMMUNIKATION IN EINEM KOMMUNIKATIONSNETZWERK
PROCÉDÉS, ÉQUIPEMENT UTILISATEUR ET NOEUD DE RÉSEAU DE SOUS-SYSTÈME MULTIMÉDIA DE PROTOCOLE INTERNET POUR GÉRER UNE COMMUNICATION DANS UN RÉSEAU DE COMMUNICATION

(30) Priority: 02.05.2022 US 202263363957 P
(43) Date of publication of application: 12.03.2025
(73) Proprietor: Telefonaktiebolaget LM Ericsson (publ), 164 83 Stockholm (SE)
(72) Inventor: ANULF, Andreas, 181 31 Lidingö (SE); BURMAN, Bo, 194 47 Stockholm (SE); DAHLQVIST, Mattias, 117 56 Stockholm (SE); LINDSTRÖM, Michael, 146 40 Tullinge (SE); STILLE, Mats, 167 54 Bromma (SE)
(74) Representative: Ericsson
(86) International application number: PCT/EP2023/061518
(87) International publication number: WO 2023/213797

(56) References cited:
- US-A1- 2008 130 560
- HUAWEI ET AL: "IMS data channel registration", vol. CT WG1, no. E-meeting; 20211111 - 20211119, 4 November 2021 (2021-11-04), XP052178956, Retrieved from the Internet <URL:https://ftp.3gpp.org/tsg_ct/WG1_mm-cc-sm_ex-CN1/TSGC1_133e/Docs/C1-216893.zip C1-216893_Rel-17_TEI17_24229 IMS data channel registration.docx> [retrieved on 20211104]
- SHABNAM SULTANA ET AL: "KI#10: New Solution for Mid Call IMS DC Session setup", vol. 3GPP SA 2, no. Online; 20220817 - 20220826, 10 August 2022 (2022-08-10), XP052183919, Retrieved from the Internet <URL:https://www.3gpp.org/ftp/tsg_sa/WG2_Arch/TSGS2_152E_Electronic_2022-08/Docs/S2-2205519.zip S2-2205519GRTC__KI10IMSDCSessionUpdate.docx> [retrieved on 20220810]

## Description

### TECHNICAL FIELD

Embodiments herein relate to an Internet Protocol Multimedia Subsystem (IMS) network node, a user equipment (UE) and methods performed therein regarding wireless communication. Furthermore, a computer program and a computer-readable storage medium are also provided herein. In particular, embodiments herein relate to handling communication, such as IMS sessions, in a communication network.

### BACKGROUND

In a typical communication network, user equipments (UE), also known as terminals, wireless communication devices, mobile stations, stations (STA) and/or wireless devices, communicate via a Radio Access Network (RAN) with one or more core networks (CN). The RAN covers a geographical area which is divided into service areas or cell areas, with each service area or cell area being served by radio network node such as an access node e.g. a Wi-Fi access point or a radio base station (RBS), which in some networks may also be called, for example, a NodeB, a gNodeB, or an eNodeB. The service area or cell area is a geographical area where radio coverage is provided by the radio network node. One or more radio network nodes operate on radio frequencies to communicate over an air interface with the UEs within range of the radio network node. Respective radio network node communicates over a downlink (DL) to the UE and the UE communicates over an uplink (UL) to the respective radio network node.

A Universal Mobile Telecommunications System (UMTS) is a third generation telecommunication network, which evolved from the second generation (2G) Global System for Mobile Communications (GSM). The UMTS terrestrial radio access network (UTRAN) is essentially a RAN using wideband code division multiple access (WCDMA) and/or High-Speed Packet Access (HSPA) for communication with user equipment. In a forum known as the Third Generation Partnership Project (3GPP), telecommunications suppliers propose and agree upon standards for present and future generation networks and UTRAN specifically, and investigate enhanced data rate and radio capacity. In some RANs, e.g., as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. The RNCs are typically connected to one or more core networks.

Specifications for the Evolved Packet System (EPS) have been completed within the 3GPP and this work continues in the coming 3GPP releases, such as 6^{th} generation (6G) networks and development of 5G such as New Radio (NR). The EPS comprises the Evolved Universal Terrestrial Radio Access Network (E-UTRAN), also known as the Long-Term Evolution (LTE) radio access network, and the Evolved Packet Core (EPC), also known as System Architecture Evolution (SAE) core network. E-UTRAN/LTE is a 3GPP radio access technology wherein the radio network nodes are directly connected to the EPC core network. As such, the Radio Access Network (RAN) of an EPS has an essentially "flat" architecture comprising radio network nodes connected directly to one or more core networks.

With the 5G technologies such as NR, the use of very many transmit- and receive-antenna elements may be of great interest as it makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

The IMS is a well-known 3GPP standard allowing sessions to be setup between two or more parties for a broad variety of services such as voice or video call, interactive messaging sessions or third-party specific applications. A protocol chosen by 3GPP is the Session Initiation Protocol (SIP). The SIP provides a mechanism for registration of UEs and for setting up multimedia sessions. The SIP REGISTER method enables the registration of user agent's current location and the SIP INVITE method enables the setting up of a session. IMS is implemented by Public Land Mobile Network (PLMN) operators as an architectural framework for delivering IP multimedia services to their subscribers.

Adding data channel (DC) content is a new addition to the existing IMS framework, and enables users initiating IMS calls to other peers or to enterprises to interactively handle web pages during the conversations to enable them to share things in real-time.

3GPP TSG-CT WG1 Meeting #133-e E-meeting 11-19 November 2021 C1-216893 shows IMS data channel registration.

US 2008/130560 A1 (KHANDEKAR AAMOD [US] ET AL), (2008-06-05) shows that an access point can generate a broadcast keep-alive message in the form of a bitmap. The bitmap can be generated by mapping respective data channels that are persistently assigned to access terminals to bits. Bits generated for a bitmap keep-alive message can indicate whether packets are buffered for communication on their corresponding data channels. The generated keep-alive message can then be sent to access terminals, which can determine whether to attempt to detect a packet on respective data channels assigned to the access terminals based on the value of the corresponding bits in the bitmap message.

### SUMMARY

As part of developing embodiments herein one or more problems have been identified. In the existing preliminary technical 3GPP proposals, see TS 26.114 v.17.4.0 and ongoing work items in Rel-18, a UE establishes data channels between the UE and the network enabling obtaining content without any prior indication about whether the network has any DC content to provide at all. Thus, a problem with the current technology approach, see 3GPP TS 26.114 v.17.4.0, is that the originating and terminating network of a voice and/or video call, do not have any ability to provide UEs with information about whether they have any DC content to provide or not to the UEs. The UEs are setting up the data channels anyway, which leads to a signalling overhead and unnecessary reservation of network resources. An originating or terminating network domain that are generally capable to use DC, but which does not have any content to provide, will not be able to satisfy the UE's attempt to make use of DC. There is no information shared between originating and terminating networks if DC content is available for the users. The fact that the network sides may be hosted by different operators makes this more complex. In the initial phase of data channel deployments, it may often be the case that the UEs have implemented DC capability, but the networks still do not have any DC content to offer. This may lead to that network resources must be allocated before knowing if they will be used or not. Only a fraction of calls will have potential to use the DC capability initially.

An object herein is to provide a mechanism to enable communication, for example, handle data channel communication of an IMS session, in an efficient manner in a communication network. The object is achieved as claimed in claims 1,7,10 and 11.

According to an aspect the object is achieved by providing a method performed by an IMS network node, such as an IMS application server (AS), for handling an IMS session in a communication network. The IMS network node provides to a UE an indication in a SIP message, indicating available DC content or not for the IMS session.

According to another aspect the object is achieved by providing a method performed by a user equipment for handling an IMS session in a communication network. The UE receives, from an IMS network node, in a SIP message, an indication of available DC content or not for the IMS session.

According to yet another aspect the object is achieved by providing an IMS network node, and a user equipment configured to perform the methods herein, respectively.

It is furthermore provided herein a computer program product comprising instructions, which, when executed on at least one processor, cause the at least one processor to carry out the methods herein, as performed by the IMS network node and the UE, respectively. It is additionally provided herein a computer-readable storage medium, having stored thereon a computer program product comprising instructions which, when executed on at least one processor, cause the at least one processor to carry out the methods herein, as performed by the IMS network node and the UE, respectively.

It is thus provided an IMS network node for handling an IMS session in a communication network. The IMS network node is configured to provide to a UE an indication in a SIP message, indicating available DC content or not for the IMS session.

It is thus provided a user equipment for handling an IMS session in a communication network. The UE is configured to receive, from an IMS network node, in a SIP message, an indication indicating available DC content or not for the IMS session.

It is herein disclosed methods for network domains to indicate to UEs whether there is DC content available or not, to avoid allocation of unnecessary network and radio resources, e.g., unnecessary signaling and media resources, when there is no content available. Hence, the UEs and the network may avoid establishment of data channels if the network does not explicitly indicate that it has a DC content or a DC content capability, and allocation of unnecessary network and radio resources (signaling and media) is avoided when there is no DC content available. Thus, embodiments herein enable a communication, e.g., handle or manage IMS sessions comprising DC content or not, in an efficient manner in the communication network.

### BRIEF DESCRIPTION OF THE DRAWINGS

Embodiments will now be described in more detail in relation to the enclosed drawings, in which:
Fig. 1 shows an overview depicting a communication network according to embodiments herein;
Fig. 2 shows a combined signalling scheme and flowchart depicting embodiments herein;
Fig. 3 shows a flowchart illustrating a method performed by a IMS network node according to embodiments herein;
Fig. 4 shows a flowchart illustrating a method performed by a UE according to embodiments herein;
Fig. 5 shows a combined signalling scheme and flowchart depicting embodiments herein;
Fig. 6 shows a combined signalling scheme and flowchart depicting embodiments herein;
Figs. 7a-7b show block diagrams depicting embodiments of an IMS network node according to embodiments herein; and
Figs. 8a-8b show block diagrams depicting embodiments of a UE according to embodiments herein.

### DETAILED DESCRIPTION

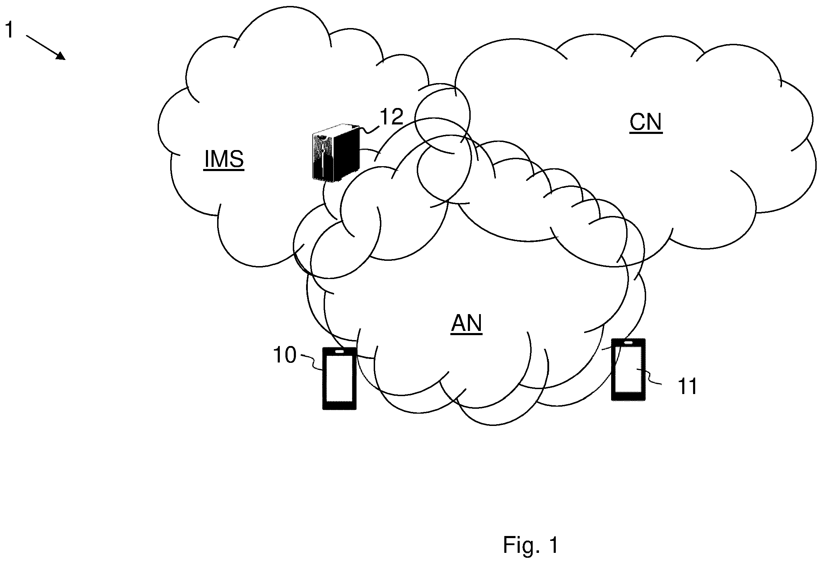

Embodiments herein relate to communication networks in general. Fig. 1 is a schematic overview depicting **a communication network 1.** The communication network 1 comprises one or more access networks such as RANs and one or more CNs. The communication network 1 may use one or a number of different technologies. Embodiments herein relate to recent technology trends that are of particular interest in a New Radio (NR) context, however, embodiments are also applicable in further development of existing wireless communications systems such as e.g. LTE or Wideband Code Division Multiple Access (WCDMA).

In the communication network 1, **a first UE 10** such as a mobile station, a wireless device, a non-access point (non-AP) STA, a STA, and/or a wireless terminal, is comprised communicating via e.g. one or more Access Networks (AN), e.g. RAN, to one or more core networks (CN). The first UE 10 may be communicating with **a second UE 11.** The first and the second UE are referred to herein **as UE 100.** It should be understood by the skilled in the art that "UE" is a non-limiting term which means any terminal, wireless communications terminal, user equipment, Internet of things (IoT) capable device, Machine Type Communication (MTC) device, Device to Device (D2D) terminal, or node e.g. smart phone, laptop, mobile phone, sensor, relay, mobile tablets or even a small base station capable of communicating using radio communication with a radio network node within an area served by the radio network node. The first UE 10 may be referred to as local or originating UE and the second UE 11 may be referred to as remote or terminating UE.

The communication network 1 provides IMS services, such as voice over LTE (VoLTE), Voice over NR (VoNR), or similar, and comprises **an IMS network node 12.** The first network node 12 may be a IMS application server (AS) or another network node related to an IMS session. The IMS network node may be an originating network node in the originating domain or a terminating network node in the communication network 1.

Embodiments herein relate to handling an IMS session between UEs in the communication network 1. The IMS network node 12 provide an indication to a UE, such as the first or the second UE, wherein the indication indicates available data channel content or not for an IMS session.

An advantage with the proposed solution is that UEs and also network can avoid establishment of data channels if the network does not explicitly indicate that it has a DC content capability or availability. This avoids allocation of unnecessary network and radio resources (signalling and media - wise) when there is no DC content available.

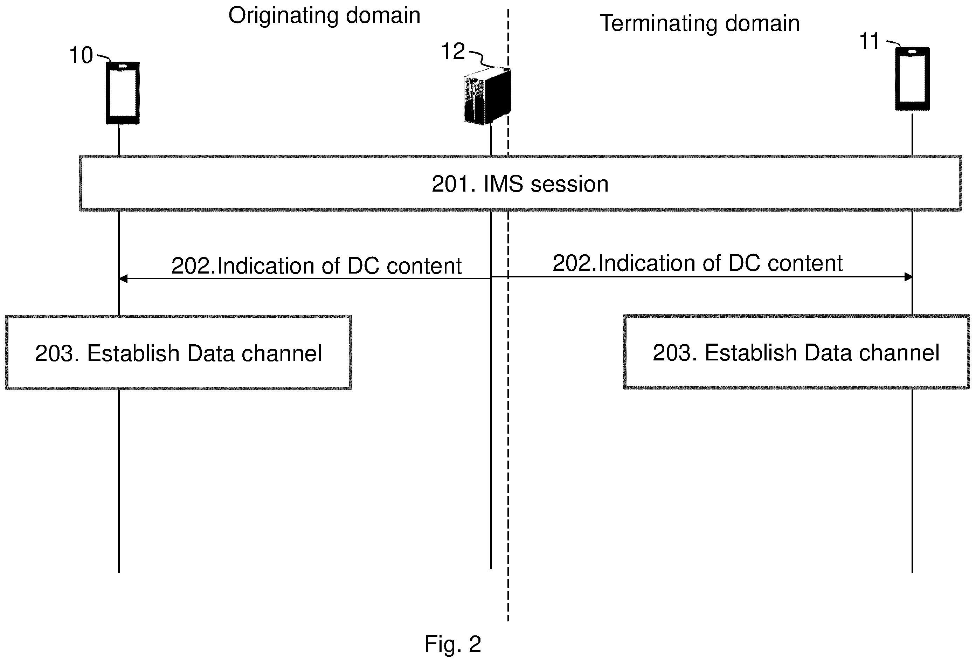

**Fig. 2** shows a combined flowchart and signalling scheme according to some embodiments herein.

**Action 201.** The UEs, such as the first UE 10 and the second UE 11 may initiate an IMS session or the IMS session may be established.

**Action 202.** The proposal herein is to introduce the indication of the DC content availability such as a local domain content capability and a remote domain content capability where these capabilities are exchanged in a SIP header, e.g., Contact or Feature caps, of an initial SIP request and/or provisional/final SIP response of for instance a VoNR call. The indication may be provided by the IMS node 12.

This content discovery ensures that the originating and terminating UEs in a voice call only establish DC bootstrap channel(s) when DC content is available.

If the originating domain has DC content for the originating UE 10, it indicates a Local Content capability in the provisional/final SIP response sent within the session establishment towards the originating UE 10. If the originating domain has DC content for the terminating UE 11, it indicates a Remote Content capability in a SIP message sent towards the terminating UE 11, e.g. a SIP INVITE.

If the terminating domain has DC content for the originating UE 10, it adds a Remote Content capability in the SIP provisional/final response sent within the session establishment to the originating UE 10.

If the terminating domain has DC content for the terminating UE 11, it adds a Local Content capability in a SIP message sent towards the terminating UE 11, e.g., a SIP INVITE.

**Action 203.** The UE, for example, the first UE 10 and/or the second UE 11, that discovers either the Local Content- or Remote Content capability, can establish one or more data channels towards the indicated network domain, to obtain content over said data channels.

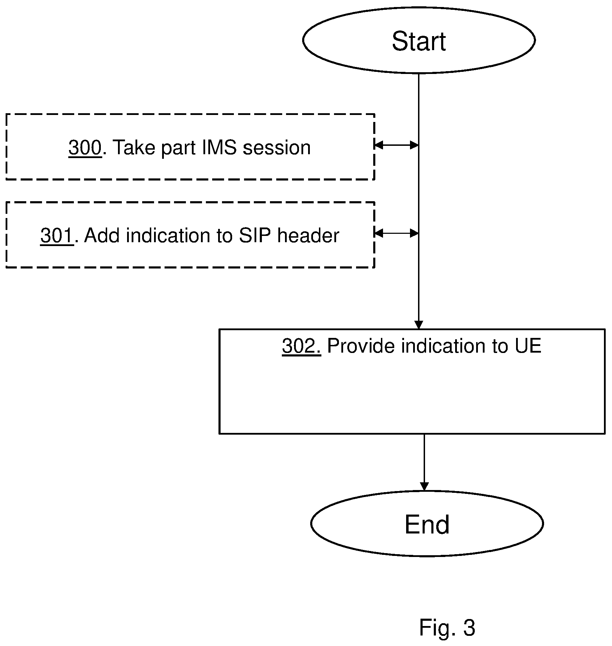

The method actions performed by the IMS network node 12, such as a domain server or IMS AS, for handling the IMS session of one or more UEs in the communication network 1 according to embodiments herein will now be described with reference to a flowchart depicted in **Fig. 3****.** The actions do not have to be taken in the order stated below. Dashed boxes indicate optional features.

**Action 300.** The IMS network node 12 may take part during the IMS session initiation.

**Action 301.** The IMS network node 12 adds the indication being an indication of a Local-, and/or a remote- data channel indication into a SIP header of a SIP INVITE and/or SIP 200 message.

**Action 302.** The IMS network node 12 provides to the UE 100 the indication in a SIP message, indicating available data channel content or not for an IMS session. The indication may comprise a Content capability in the SIP message. The IMS network node 12 may transmit the SIP message with the indication to a UE of an originating domain when DC content is present for the UE in the originating domain. The IMS network node 12 may transmit the SIP message with the indication to a UE of a terminating domain when DC content is present for the UE in the terminating domain. The indication may be a representation of that an operator has decided to assign data channel content feature to the UE. The IMS network node may provide the indication by transmitting the SIP INVITE and/or SIP 200 message to the UE 10.

The IMS network node 12 may comprise an IMS node such as an IMS-AS node such as MMTel-AS, that is adding the indication or indications such as Local-, and/or remote, DC content indication/s. A local or remote DC content indication is put into a SIP header of a SIP INVITE and/or SIP 200 message. The SIP header can e.g. be Feature Caps header.

The SIP message indication may be a representation of that the operator has decided to assign DC content feature to a specific served user, i.e. information stored as part of service user provisioning data.

It should be noted that whenever a network node receives a request from its local UE to establish local data channels, the network node may as a configurable option 'push' opening of remote data channels towards the remote network and remote UE.

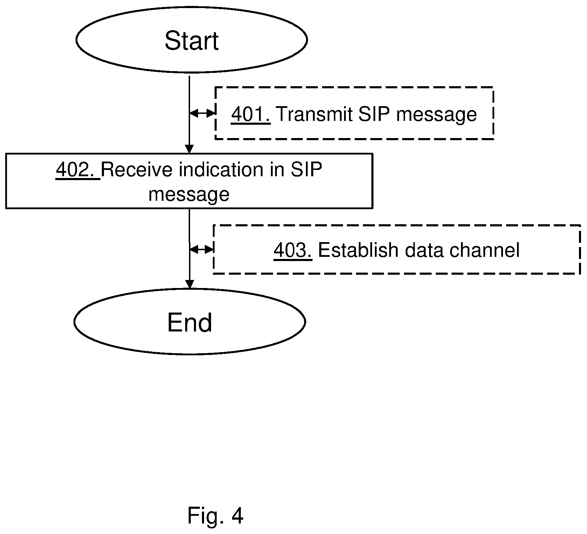

The method actions performed by the UE 100, such as the first UE 10 or the second UE 11, for handling the IMS session of one or more UEs in the communication network 1 according to embodiments herein will now be described with reference to a flowchart depicted in **Fig. 4****.** The actions do not have to be taken in the order stated below. Dashed boxes indicate optional features.

**Action 401.** The UE 100 receives, from the IMS network node 12, an indication in a SIP message, indicating available data channel content or not for the IMS session. The UE 100 may receive the indication by receiving the SIP message with the indication from the IMS network node 12 of an originating domain when data channel content is present for the UE in the originating domain. The UE 100 may receive the indication by receiving the SIP message with the indication from the IMS network node 12 of a terminating domain when data channel content is present for the UE in the terminating domain. The indication may comprise a Content capability in the SIP message. The indication may be a representation of that an operator has decided to assign data channel content feature to the UE.

**Action 402.** The UE 100 may establish, upon discovering available data channel content, one or more data channels towards an indicated network domain, to obtain data content over said data channels. The UE 100, for example, the first UE 10 and/or the second UE 11, that discovers the indication such as either the Local Content- or Remote Content capability, may establish one or more data channels towards the indicated network domain, to obtain content over said data channels. I.e. upon receiving the indication the UE establishes a data channel.

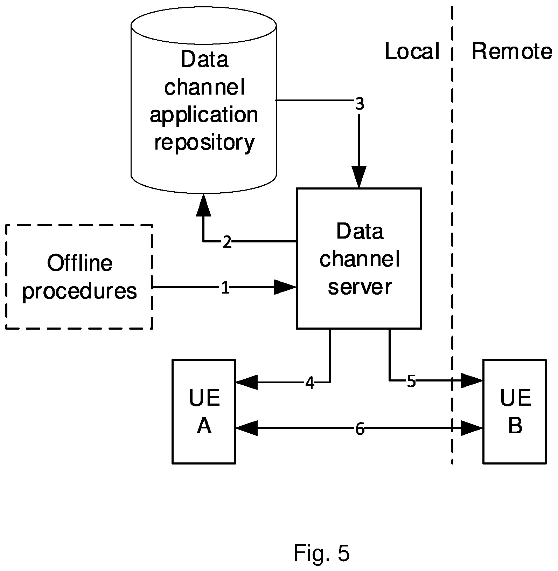

3GPP 26.114 v.17.4.0 is showing establishment of a DC call, wherein the data channel application is, referring to the numbered arrows in **Fig. 5****.** The first UE 10 is herein exemplified as UE A and the second UE 11 is exemplified as UE B.
1. Uploaded to the network, by a UE user or some other authorized party.
2. Stored in a data channel application repository in the network.
3. During the data channel Multimedia Telephony Service for IMS (DCMTSI) call where it should be used, retrieved from the repository.
4. Sent through a bootstrap data channel to the local UE A.
5. Sent through a bootstrap data channel to the remote UE B. This may happen in parallel with and rather independent of step 4.
6. Any additional data channels created and used by the data channel application itself are established, logically, between UE A and UE B. Data transmission on data channels shall not start until there is confirmation that both peers have instantiated the data channel, using the same procedures as described for WebRTC. The traffic may effectively go through the Data Channel Server, e.g., when the bootstrap and end-to-end data channels have the same anchoring point. This traffic may pass across an inter-operator border if UE A and UE B belong to different operators' networks.

During an ordinary voice Multimedia Telephony Service for IMS (MTSI) call establishment, the indication can be added into the SIP signals.
Example: local UE-A sets up a voice call by sending a SIP INVITE (voice). In the successful response (SIP 200 OK), UE A discovers that the 200 OK includes a SIP header with the indication such as a Local Content indication. Since UE-A understands then that local content exists, it can establish bootstrap data channels to obtain that content, e.g., an application list menu. Thus, a normal voice call may be initiated and then data channels may be added mid-call upon discovery that DC content exists as indicated in the SIP message.

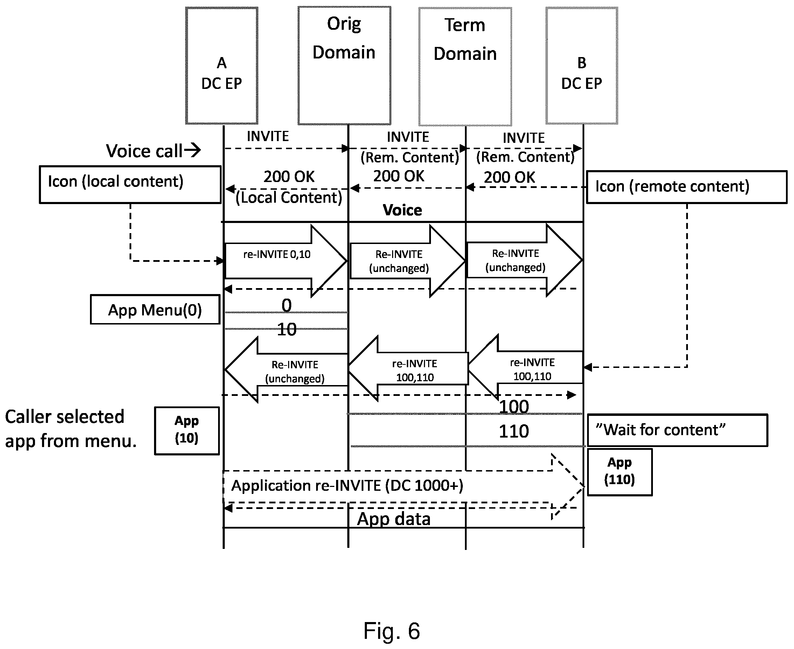

In the description referring to **Fig. 6****,** the originating UE is denoted UE-A, the originating UE's user is denoted the "caller", the terminating UE is denoted UE-B, and the terminating UE's user is denoted the "callee".

### UE-A/Caller perspective:

Discovery of the indication such as either Local or Remote Content capability by UE-A is made based on an explicit indication in a provisional or final session setup response, e.g., in an 200 OK (SIP INVITE), allowing UE-A to provide a Local and or Remote content availability indication to the caller about that local and/or remote content exist.

The information about available content according to the received indication, may trigger establishing local data channels for DC content from the originating network domain and/or remote data channels for DC content from the terminating network domain.

The establishment to access content is realized by UE-A sending a re-INVITE where a Session Description Protocol (SDP), besides initial session media e.g., voice, contains additional media information about desired DC connectivity, e.g., DC streamID '0' and '10' (see 3GPP TS 26.114 v17.4.0) if local content, originating network domain provided, and/or DC streamlD '100' and '110' if remote content, terminating network domain provided.

Upon successful response to the re-INVITE, the originating terminal UE-A fetches content on the established data channels, content such as, e.g., local operator provided application list.

### UE-B/Callee perspective:

Discovery of the indication such as either Local or Remote Content capability by UE-B is made based on an explicit indication in the initial INVITE, allowing UE-B to provide a Local and or Remote content availability indication for the callee's attention about that local and/or remote DC content exist.

The information about available DC content, may trigger a preparation of establishing remote data channels for DC content from the originating network domain and/or local data channels from the terminating network domain.

The establishment to access the DC content, is realized by the UE-B sending a re-INVITE where the SDP, besides initial session media e.g., voice, contains additional media information about desired DC connectivity, e.g., DC streamID '100', '110' if remote content (originating network domain provided), and/or DC streamID '0' and '10' if local content (terminating network domain provided). Upon successful response to the re-INVITE the terminating UE-B fetches content on the established data channels, content such as, e.g., remote operator provided application. Note that, besides the method outlined above, whenever a network receives a request from its local subscriber to establish local data channels e.g. '0' and '10', the network could as a configurable option 'push' opening of remote DC channels, e.g., '100' and '110' towards the remote network and terminal. In this way, the remote UE does not have to initiate an establishment of those remote data channels itself.
In an example, if UE-A establishes DC '0' and '10' with the originating network, then originating network could push' '100' and '110' by sending a re-INVITE with an SDP containing remote DC '100','110' to the terminating network and UE-B . Hence UE-B would not have send a re-INVITE with SDP containing DC '100' and '110' since it was 'pushed' to UE-B by the originating network.

Thus, according to embodiments herein the UEs only establish data channels with the network when the network (local or remote) has content to provide. This off-loads UEs from having to set up data channels on false grounds.

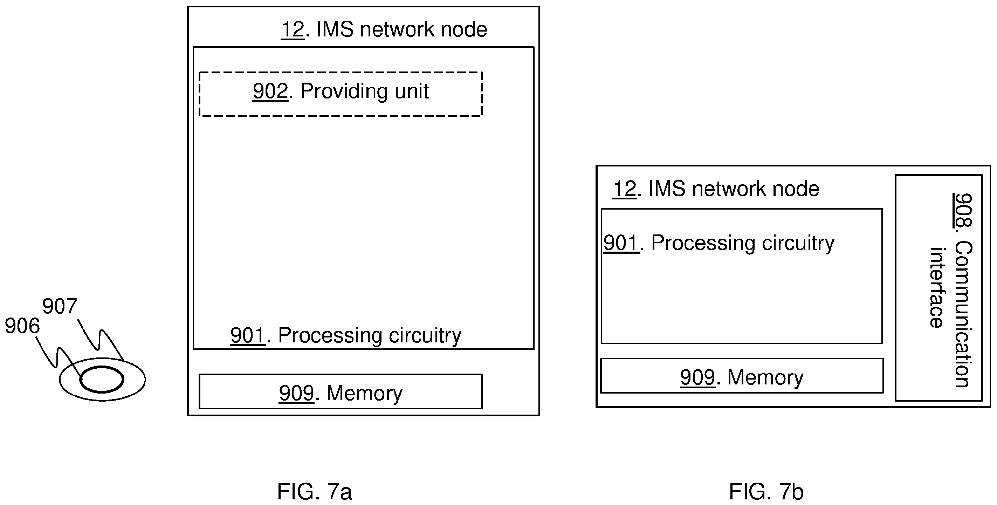

**Figs. 7a-7b** are block diagrams depicting the IMS network node 12 such as an IMS AS, for handling the IMS session of one or more UEs in the communication network 1 according to embodiments herein.

The IMS network node 12 may comprise **processing circuitry 901,** e.g., one or more processors, configured to perform the methods herein.

The IMS network node 12 may comprise **a providing unit 902,** e.g. a transmitter or a transceiver. The IMS network node 12, the processing circuitry 901, and/or the providing unit 902 is configured to provide to a UE, such as an originating UE or a terminating UE, the indication in the SIP message, indicating available data channel content or not for the IMS session. The indication may comprise a Content capability in the SIP message. The IMS network node 12, the processing circuitry 901, and/or the providing unit 902 may be configured to transmit the SIP message with the indication to a UE of an originating domain when DC content is present for the UE in the originating domain. The IMS network node 12, the processing circuitry 901, and/or the providing unit 902 may be configured to transmit the SIP message with the indication to a UE of a terminating domain when DC content is present for the UE in the terminating domain. The indication may be indicating local DC content available and/or remote DC content available. The IMS network node 12, and/or the processing circuitry 901 may be configured to add the indication being an indication of a Local-, and/or a remote- data channel indication into a SIP header of a SIP INVITE and/or SIP 200 message, and providing the indication comprises transmitting the SIP INVITE and/or SIP 200 message to the UE 10. The indication may be a representation of that an operator has decided to assign data channel content feature to the UE.

The IMS network node 12 further comprises **a memory 909.** The memory 909 comprises one or more units to be used to store data on, such as indications, configurations, resource information, contact information, DC information, IMS information, session ID, UE information, and applications to perform the methods disclosed herein when being executed, and similar. Furthermore, the IMS network node 12 may comprise a **communication interface 908** such as comprising a transmitter, a receiver and/or a transceiver, and/or one or more antennas.

The methods according to the embodiments described herein for the IMS network node 12 are respectively implemented by means of e.g. **a computer program product 906** or a computer program, comprising instructions, i.e., software code portions, which, when executed on at least one processor, cause the at least one processor to carry out the actions described herein, as performed by the IMS network node 12. The computer program product 906 may be stored on **a computer-readable storage medium 907,** e.g., a disc, a universal serial bus (USB) stick or similar. The computer-readable storage medium 907, having stored thereon the computer program product, may comprise the instructions which, when executed on at least one processor, cause the at least one processor to carry out the actions described herein, as performed by the IMS network node 12. In some embodiments, the computer-readable storage medium may be a transitory or a non-transitory computer-readable storage medium. Thus, embodiments herein may disclose an IMS network node 12 for handling communication in a wireless communications network, wherein the IMS network node 12 comprises processing circuitry and a memory, said memory comprising instructions executable by said processing circuitry whereby said IMS network node 12 is operative to perform any of the methods herein.

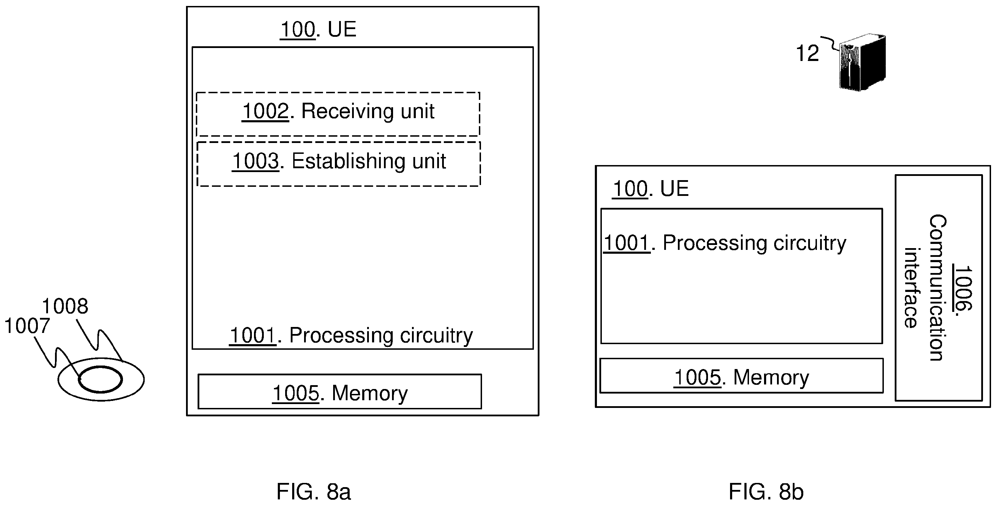

**Figs. 8a-8b** are block diagrams depicting the UE 100 such as an originating UE or a terminating UE, for handling the IMS session of one or more UEs in the communication network 1 according to embodiments herein.

The UE 100 may comprise **processing circuitry 1001,** e.g. one or more processors, configured to perform the methods herein.

The UE 100 may comprise **a receiving unit 1002,** e.g. a receiver and/or a transceiver. The UE 100, the processing circuitry 1001, and/or the receiving unit 1002 is configured to receive from the IMS network node 12, the indication in the SIP message, indicating available data channel content or not for the IMS session. The indication may comprise a Content capability in the SIP message. The indication may be indicating local DC content available and/or remote DC content available. The UE 100, the processing circuitry 1001, and/or the receiving unit 1002 may be configured to receive the indication by receiving the SIP message with the indication from the IMS network node 12 of an originating domain when data channel content is present for the UE in the originating domain. The UE 100, the processing circuitry 1001, and/or the receiving unit 1002 may be configured to receive the indication by receiving the SIP message with the indication from the IMS network node 12 of a terminating domain when data channel content is present for the UE in the terminating domain.

The UE 100 may comprise **an establishing unit 1003,** e.g. a transmitter and/or a transceiver. The UE 100, the processing circuitry 1001, and/or the establishing unit 1003 may be configured to establish, upon discovering available data channel content, one or more data channels towards an indicated network domain, to obtain data content over said data channels. The UE 100, the processing circuitry 1001, and/or the establishing unit 1003 may be configured to establish one or more data channels for the DC content. Furthermore, the UE 100, the processing circuitry 1001, and/or the establishing unit 1003 may be configured to send a SIP message to the IMS network node 12 such as a SIP invite or a SIP 200 OK message. The indication may be a representation of that an operator has decided to assign data channel content feature to the UE.

The UE 100 further comprises **a memory 1005.** The memory 1005 comprises one or more units to be used to store data on, such as indications, IMS information, Resource information, session ID, contact information, thresholds, data related to nodes, and applications to perform the methods disclosed herein when being executed, and similar. Furthermore, the UE 100 may comprise **a communication interface 1006** such as comprising a transmitter, a receiver and/or a transceiver, and/or one or more antennas.

The methods according to the embodiments described herein for the UE 100 are respectively implemented by means of e.g. **a computer program product 1007** or a computer program, comprising instructions, i.e., software code portions, which, when executed on at least one processor, cause the at least one processor to carry out the actions described herein, as performed by the UE 100. The computer program product 1007 may be stored on **a computer-readable storage medium 1008,** e.g. a disc, a universal serial bus (USB) stick or similar. The computer-readable storage medium 1008, having stored thereon the computer program product, may comprise the instructions which, when executed on at least one processor, cause the at least one processor to carry out the actions described herein, as performed by the UE 100. In some embodiments, the computer-readable storage medium may be a transitory or a non-transitory computer-readable storage medium. Thus, embodiments herein may disclose a UE 100 for handling communication in a wireless communications network, wherein the UE 100 comprises processing circuitry and a memory, said memory comprising instructions executable by said processing circuitry whereby said UE 100 is operative to perform any of the methods herein.

In some embodiments a more general term "network node" is used and it can correspond to any type of radio-network node or any network node, which communicates with a wireless device and/or with another network node. Examples of network nodes are NodeB, MeNB, SeNB, a network node belonging to Master cell group (MCG) or Secondary cell group (SCG), base station (BS), multi-standard radio (MSR) radio node such as MSR BS, eNodeB, network controller, radio-network controller (RNC), base station controller (BSC), relay, donor node controlling relay, base transceiver station (BTS), access point (AP), transmission points, transmission nodes, Remote radio Unit (RRU), Remote Radio Head (RRH), nodes in distributed antenna system (DAS), etc.

In some embodiments the non-limiting term wireless device or user equipment (UE) is used and it refers to any type of wireless device communicating with a network node and/or with another wireless device in a cellular or mobile communication system. Examples of UE are loT capable device, target device, device to device (D2D) UE, proximity capable UE (aka ProSe UE), machine type UE or UE capable of machine to machine (M2M) communication, Tablet, mobile terminals, smart phone, laptop embedded equipped (LEE), laptop mounted equipment (LME), USB dongles etc.

Embodiments are applicable to any RAT or multi-RAT systems, where the wireless device receives and/or transmit signals (e.g. data) e.g. New Radio (NR), Wi-Fi, Long Term Evolution (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

As will be readily understood by those familiar with communications design, that functions means or circuits may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware and/or program or application data. Other hardware, conventional and/or custom, may also be included. Designers of communications devices will appreciate the cost, performance, and maintenance trade-offs inherent in these design choices.

Any appropriate actions, methods, features, functions, or benefits disclosed herein may be performed through one or more functional units or modules of one or more virtual apparatuses. Each virtual apparatus may comprise a number of these functional units.

These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

## Claims

1. A method performed by an Internet Protocol Multimedia Subsystem, IMS, network node (12) for handling an IMS session of one or more user equipments, UE, in a communication network (1), the method comprising
- providing (302) to a UE (100) an indication in a session initiation protocol, SIP, message, indicating available data channel content for an IMS session, wherein the indication is a representation of that an operator has decided to assign data channel content feature to the UE.

2. The method according to claim 1, wherein providing the indication comprises transmitting the SIP message with the indication to the UE of an originating domain when data channel content is present for the UE in the originating domain.

3. The method according to any of the claims 1-2, wherein providing the indication comprises transmitting the SIP message with the indication to the UE of a terminating domain when data channel content is present for the UE in the terminating domain.

4. The method according to any of the claims 1-3, further comprising
- adding (301) the indication being an indication of a Local-, and/or a remote- data channel indication into a SIP header of a SIP INVITE and/or SIP 200 message, and providing the indication comprises transmitting the SIP INVITE and/or SIP 200 message to the UE (10).

5. The method according to any of the claims 1-4, wherein the IMS network node comprises an IMS-application server node.

6. The method according to any of the claims 1-5, wherein the indication comprises a Content capability in the SIP message.

7. A method performed by a user equipment, UE, (100) for handling an Internet Protocol Multimedia Subsystem, IMS, session of one or more UEs in a communication network (1), the method comprising:
- receiving (401), from an IMS network node (12), an indication in a session initiation protocol, SIP, message, indicating available data channel content for the IMS session, wherein the indication is a representation of that an operator has decided to assign data channel content feature to the UE; and
- establishing (402), upon discovering available data channel content, one or more data channels towards an indicated network domain, to obtain data content over said one or more data channels.

8. The method according to claim 7, wherein receiving the indication comprises receiving the SIP message with the indication from the IMS network node (12) of an originating domain when data channel content is present for the UE in the originating domain.

9. The method according to any of the claims 7-8 wherein receiving the indication comprises receiving the SIP message with the indication from the IMS network node (12) of a terminating domain when data channel content is present for the UE in the terminating domain.

10. The method according to any of the claims 7-9, wherein the indication comprises a Content capability in the SIP message.

11. An Internet Protocol Multimedia Subsystem, IMS, network node (12) for handling an IMS session of one or more user equipments, UE, in a communication network (1), wherein the IMS network node is configured to
provide to a UE (100) an indication in a session initiation protocol, SIP, message, indicating available data channel content for an IMS session, wherein the indication is a representation of that an operator has decided to assign data channel content feature to the UE.

12. A user equipment, UE, (100) for handling an Internet Protocol Multimedia Subsystem, IMS, session of one or more UEs in a communication network (1), wherein the UE is configured to:
receive from an IMS network node (12), an indication in a session initiation protocol, SIP, message, indicating available data channel content for the IMS session, wherein the indication is a representation of that an operator has decided to assign data channel content feature to the UE; and
establish, upon discovering available data channel content, one or more data channels towards an indicated network domain, to obtain data content over said data channels.

13. A computer program product comprising instructions, which, when executed on at least one processor, cause the at least one processor to carry out the method according to any of the claims 1-10, as performed by the IMS network node and the UE, respectively.

14. A computer-readable storage medium, having stored thereon a computer program product comprising instructions which, when executed on at least one processor, cause the at least one processor to carry out the method according to any of the claims 1-10, as performed by the IMS network node and the UE, respectively.

## Patentansprüche

1. Verfahren, welches von einem Netzwerkknoten (12) des Internet-Protokoll Multimedia Subsystems, IMS, zur Handhabung einer IMS-Sitzung eines oder mehrerer Benutzerausrüstungen, UE, in einem Kommunikationsnetzwerk (1) durchgeführt wird, wobei das Verfahren umfasst:
- Bereitstellen (302) einer Anzeige in einer SIP-Nachricht (Session Initiation Protocol), welche verfügbaren Datenkanalinhalt für eine IMS-Sitzung anzeigt, für eine UE (100), wobei die Anzeige eine Repräsentation dafür ist, dass ein Betreiber beschlossen hat, dem UE das Datenkanalinhaltsmerkmal zuzuweisen.

2. Verfahren nach Anspruch 1, wobei Bereitstellen der Anzeige Übertragen der SIP-Nachricht mit der Anzeige einer Ursprungsdomäne an das UE umfasst, wenn Datenkanalinhalt für das UE in der Ursprungsdomäne vorhanden ist.

3. Verfahren nach einem der Ansprüche 1-2, wobei Bereitstellen der Anzeige Übertragen der SIP-Nachricht mit der Anzeige einer Zieldomäne an das UE umfasst, wenn Datenkanalinhalt für das UE in der Zieldomäne vorhanden ist.

4. Verfahren nach einem der Ansprüche 1-3, weiter umfassend:
- Hinzufügen (301), dass es sich bei der Anzeige um eine Anzeige einer Lokal-, und/oder einer Remote-Datenkanalanzeige in einen SIP-Header einer SIP INVITE- und/oder SIP-200-Nachricht handelt, und dass Bereitstellen der Anzeige Übertragen der SIP-INVITE- und/oder SIP 200-Nachricht an das UE (10) umfasst.

5. Verfahren nach einem der Ansprüche 1-4, wobei der IMS-Netzwerkknoten einen IMS-Anwendungsserverknoten umfasst.

6. Verfahren nach einem der Ansprüche 1-5, wobei die Anzeige eine Inhaltsfähigkeit in der SIP-Nachricht umfasst.

7. Verfahren, welches von einem Benutzergerät, UE, (100) zur Handhabung einer Internet-Protokoll-Multimedia Subsystem, IMS,-Sitzung eines oder mehrerer UEs in einem Kommunikationsnetzwerk (1) durchgeführt wird, wobei das Verfahren umfasst:
- Empfangen (401) einer Anzeige in einer SIP-Nachricht, welche verfügbaren Datenkanalinhalt für die IMS-Sitzung anzeigt, von einem IMS-Netzwerkknoten (12), wobei die Anzeige eine Repräsentation dafür ist, dass ein Betreiber beschlossen hat, dem UE das Datenkanalinhaltsmerkmal zuzuweisen; und
- Herstellen (402) eines oder mehrerer Datenkanäle in Richtung einer angezeigten Netzwerkdomäne, wenn verfügbarer Datenkanalinhalt entdeckt wird, um Dateninhalt über den einen oder die mehreren Datenkanäle zu erhalten.

8. Verfahren nach Anspruch 7, wobei Empfangen der Anzeige Empfangen der SIP-Nachricht mit der Anzeige einer Ursprungsdomäne von dem IMS-Netzwerkknoten (12) umfasst, wenn Datenkanalinhalt für das UE in der Ursprungsdomäne vorhanden ist.

9. Verfahren nach einem der Ansprüche 7-8, wobei Empfangen der Anzeige Empfangen der SIP-Nachricht mit der Anzeige einer Zieldomäne von dem IMS-Netzwerkknoten (12) umfasst, wenn Datenkanalinhalt für das UE in der Zieldomäne vorhanden ist.

10. Verfahren nach einem der Ansprüche 7-9, wobei die Anzeige eine Inhaltsfähigkeit in der SIP-Nachricht umfasst.

11. Netzwerkknoten (12) eines Internetprotokoll-Multimedia Subsystems, IMS, zur Handhabung einer IMS-Sitzung einer oder mehrerer Benutzerausrüstungen, UE, in einem Kommunikationsnetzwerk (1), wobei der IMS-Netzwerkknoten dazu konfiguriert ist:
eine Anzeige in einer SIP-Nachricht, welche verfügbaren Datenkanalinhalt für eine IMS-Sitzung anzeigt, für eine UE (100) bereitzustellen, wobei die Anzeige eine Repräsentation dafür ist, dass ein Betreiber beschlossen hat, dem UE das Datenkanalinhaltsmerkmal zuzuweisen.

12. Benutzerausrüstung, UE, (100) zur Handhabung einer Internet-Protokoll Multimedia Subsystem, IMS, -Sitzung eines oder mehrerer UEs in einem Kommunikationsnetzwerk (1), wobei das UE dazu konfiguriert ist:
eine Anzeige in einer SIP-Nachricht, welche verfügbaren Datenkanalinhalt für die IMS-Sitzung anzeigt, von einem IMS-Netzwerkknoten (12) zu empfangen, wobei die Anzeige eine Repräsentation dafür ist, dass ein Betreiber beschlossen hat, dem UE das Datenkanalinhaltsmerkmal zuzuweisen; und
einen oder mehrere Datenkanäle in Richtung einer angezeigten Netzwerkdomäne herzustellen, wenn verfügbarer Datenkanalinhalt entdeckt wird, um Dateninhalt über die Datenkanäle zu erhalten.

13. Computerprogrammprodukt, welches Anweisungen umfasst, welche, wenn sie auf zumindest einem Prozessor ausgeführt werden, den zumindest einen Prozessor veranlassen, das Verfahren nach einem der Ansprüche 1-10 durchzuführen, wie es von dem IMS-Netzwerkknoten bzw. von dem UE durchgeführt wird.

14. Computerlesbares Speichermedium, welches ein Computerprogrammprodukt darauf gespeichert hat, welches Anweisungen umfasst, welche, wenn sie auf zumindest einem Prozessor ausgeführt werden, den zumindest einen Prozessor veranlassen, das Verfahren nach einem der Ansprüche 1-10 durchzuführen, wie es von dem IMS-Netzwerkknoten bzw. von dem UE durchgeführt wird.

## Revendications

1. Procédé mis en œuvre par un nœud de réseau de sous-système multimédia de protocole Internet, IMS, (12) pour gérer une session IMS d'un ou plusieurs équipements utilisateurs, UE, dans un réseau de communication (1), le procédé comprenant
- la fourniture (302) à un UE (100) d'une indication dans un message de protocole d'initiation de session, SIP, indiquant le contenu de canal de données disponible pour une session IMS, dans lequel l'indication est une représentation du fait qu'un opérateur a décidé d'attribuer une fonctionnalité de contenu de canal de données à l'UE.

2. Procédé selon la revendication 1, dans lequel la fourniture de l'indication comprend la transmission du message SIP avec l'indication à l'UE d'un domaine d'origine lorsque le contenu de canal de données est présent pour l'UE dans le domaine d'origine.

3. Procédé selon l'une quelconque des revendications 1-2, dans lequel la fourniture de l'indication comprend la transmission du message SIP avec l'indication à l'UE d'un domaine terminal lorsque le contenu de canal de données est présent pour l'UE dans le domaine terminal.

4. Procédé selon l'une quelconque des revendications 1-3, comprenant en outre
- l'ajout (301) de l'indication qui est une indication d'une indication de canal de données local et/ou distant dans un en-tête SIP d'un message SIP INVITE et/ou SIP 200, et la fourniture de l'indication comprend la transmission du message SIP INVITE et/ou SIP 200 à l'UE (10).

5. Procédé selon l'une quelconque des revendications 1-4, dans lequel le nœud de réseau IMS comprend un nœud de serveur d'application IMS.

6. Procédé selon l'une quelconque des revendications 1-5, dans lequel l'indication comprend une capacité de contenu dans le message SIP.

7. Procédé mis en œuvre par un équipement utilisateur, UE, (100) pour gérer une session de sous-système multimédia de protocole Internet, IMS, d'un ou plusieurs UE dans un réseau de communication (1), le procédé comprenant :
- la réception (401), en provenance d'un nœud de réseau IMS (12), d'une indication dans un message de protocole d'initiation de session, SIP, indiquant le contenu de canal de données disponible pour la session IMS, dans lequel l'indication est une représentation qu'un opérateur a décidé d'attribuer une fonctionnalité de contenu de canal de données à l'UE ; et
- l'établissement (402), lors de la découverte du contenu du canal de données disponible, d'un ou plusieurs canaux de données vers un domaine réseau indiqué, pour obtenir le contenu des données sur ledit un ou plusieurs canaux de données.

8. Procédé selon la revendication 7, dans lequel la réception de l'indication comprend la réception du message SIP avec l'indication du nœud de réseau IMS (12) d'un domaine d'origine lorsque le contenu de canal de données est présent pour l'UE dans le domaine d'origine.

9. Procédé selon l'une quelconque des revendications 7-8, dans lequel la réception de l'indication comprend la réception du message SIP avec l'indication du nœud de réseau IMS (12) d'un domaine terminal lorsque le contenu de canal de données est présent pour l'UE dans le domaine terminal.

10. Procédé selon l'une quelconque des revendications 7-9, dans lequel l'indication comprend une capacité de contenu dans le message SIP.

11. Nœud de réseau de sous-système multimédia de protocole Internet, IMS, (12) destiné à gérer une session IMS d'un ou plusieurs équipements utilisateurs, UE, dans un réseau de communication (1), dans lequel le nœud de réseau IMS est configuré pour
fournir à un UE (100) une indication dans un message de protocole d'initiation de session, SIP, indiquant le contenu de canal de données disponible pour une session IMS, dans lequel l'indication est une représentation du fait qu'un opérateur a décidé d'attribuer une fonctionnalité de contenu de canal de données à l'UE.

12. Équipement utilisateur, UE, (100) destiné à gérer une session de sous-système multimédia de protocole Internet, IMS, d'un ou plusieurs UE dans un réseau de communication (1), dans lequel l'UE est configuré pour :
recevoir d'un nœud de réseau IMS (12), une indication dans un message de protocole d'initiation de session, SIP, indiquant le contenu de canal de données disponible pour la session IMS, dans lequel l'indication est une représentation qu'un opérateur a décidé d'attribuer une fonctionnalité de contenu de canal de données à l'UE ; et
établir, après avoir découvert le contenu de canal de données disponible, un ou plusieurs canaux de données vers un domaine réseau indiqué, afin d'obtenir le contenu des données sur lesdits canaux de données.

13. Produit de programme informatique comprenant des instructions qui, lorsqu'elles sont exécutées sur au moins un processeur, amènent ce dernier à mettre en œuvre le procédé selon l'une quelconque des revendications 1 à 10, lorsqu'il est réalisé respectivement par le nœud de réseau IMS et l'UE.

14. Support de stockage lisible par ordinateur, sur lequel est stocké un produit de programme informatique comprenant des instructions qui, lorsqu'elles sont exécutées sur au moins un processeur, amènent ce dernier à mettre en œuvre le procédé selon l'une quelconque des revendications 1-10, lorsqu'il est réalisé respectivement par le nœud de réseau IMS et l'UE.
